# EUROPEAN PATENT SPECIFICATION

(11) **EP 1 448 728 B1**
(45) Date of publication and mention of the grant of the patent: **31.05.2006**
(21) Application number: 02782280.8
(22) Date of filing: 08.11.2002
(51) Int. Cl.: C09D 11/10, C09D 11/08

(54) **LOW TACK WATER WASHABLE LITHOGRAPHIC PRINTING INKS**
WENIG KLEBENDE MIT WASSER ABWASCHBARE LITHOGRAPHIEDRUCKFARBEN
ENCRES D'IMPRESSION LITHOGRAPHIQUE A FAIBLE POUVOIR COLLANT LAVABLES A L'EAU

(30) Priority: 09.11.2001 US 344569 P
(43) Date of publication of application: 25.08.2004
(73) Proprietor: SUN CHEMICAL CORPORATION, Parsippany, NJ 07054-1285 (US)
(72) Inventor: DIMOTAKIS, Emmanuel D., Hackensack, NJ 07601 (US); SMITH, Kenneth, Hopatong, NJ 07843 (US); OGAWA, Makoto, Tokyo 174-8520 (JP)
(74) Representative: Vossius & Partner
(86) International application number: PCT/US2002/035912
(87) International publication number: WO 2003/042308

(56) References cited:
- US-A- 4 966 628
- US-A- 5 549 741
- US-A- 5 965 633

## Description

The invention relates to low tack water washable lithographic printing ink compositions.

in an attempt to eliminate volatile organic compounds ("VOCs") in the pressroom, alternatives to conventional fountain based and oil based inks are being sought. Examples of useful waterbased flexographic printing inks are disclosed in U.S. Pat. No. 4,173,554 and in The Printing Ink Manual, edited by R. H. Leach and R. J. Pierce, pages 571-576, 5th edition, (Blueprint, 1993). Examples of useful waterbased gravure printing inks are disclosed in U.S. Pat. Nos. 4,954,556 and 5,098.478.

The lithographic printing process has always presented unique challenges to ink formulators, since such process utilizes a planographic printing plate, wherein the image and non-image areas are in the same plane on the image carrier, and two fluids are concurrently utilized to insure that ink adheres only to the image area, and not to the non-image area. In conventional lithographic printing processes, the plate is damped before it is inked with an oil based ink. Typically, the damping process utilizes a water or aqueous fountain solution, such as those described in United States Patent Nos. 3,877,372; 4,278,467; and 4,854,969. Upon damping, water forms a film on the hydrophilic areas (the non-image areas) of the printing plate, but contracts into tiny droplets on the oleophilic areas (the image areas) of the plate. When an inked roller containing the oil based ink is passed over the damped plate, it is unable to ink the areas covered by the water film (the non-image areas), but will emulsify the droplets on the water repellant areas (the image areas), causing such area to ink up. In the process of "offset lithography," the inked image on the plate does not directly print onto the paper substrate, but is first "offset" onto a rubber blanket, then transferred therefrom onto the paper substrate. Establishing and maintaining a correct ink/water balance during the printing process is critical, and requires a high level of skill. This is one of several disadvantages associated with such printing processes, as compared to flexographic and gravure printing processes. Moreover, the oil based inks and aqueous fountain solutions typically employed in conventional offset lithographic printing processes contain fairly high levels of undesirable VOCs, generally from 30 to 45%. Further, the cleaning solutions used for press wash up may also contain VOCs.

United States Patent No. 3,356,030 discloses the use of a waterbased printing ink for planographic printing utilizing a "waterless" lithographic printing plate (i.e. whose non-image areas are coated with a cured coating of a thermosetting silicone resin). However, the method entails the use of a volatile hydrocarbon versus aqueous fountain solution which will coat the non-image areas and is reapplied between successive printings. Unfortunately, the use of a volatile hydrocarbon fountain solution undermines the principal purpose of using the waterbased ink compositions, namely, the avoidance or elimination of the emission of VOCs during the printing process.

In the 1980s, a resurgence of interest in "waterless" lithographic printing occurred. Further information about waterless printing plates and processes may be found in United States Patent Nos. 5,370,906 and 5,417,749. German Offenlegungsschrift DE 41 19 348 A1 pertains to a moisture less offset printing method which uses a waterbased printing ink. The ink described therein is one which will adhere to hydrophilic materials, but not to hydrophobic materials, and contains a dye, water, 5% to 50% of a water soluble macromolecular binder, and a hygroscopic liquid, preferably a multihydric alcohol.

A method for preparing lithographic inks is described in US Patent 5,431,721 where rosins are modified with water reducible short oil alkyds, in the presence of large amounts of fatty ester oils, so as to enhance water washability of an ink produced with such modified rosins. These inks are problematic in that the large amount of fatty ester oils, having molecular weights of about 300, are detrimental to the set off and drying properties of the ink immediately after printing, especially where no heat is used. In addition, the short oil alkyds used in this method are not the most efficient water dispersible agents, thus resulting in inks having poor water washability unless a highly alkaline media is used (pH of 10.5-13). However, this causes corrosion problems for the press rollers and plates used in the printing process.

Other approaches have suggested the use of a humidity chamber (US Patent 5,725,646) or special rewetting agents to prevent the evaporation of water from the printing rollers (US Patent 6,444,021). The rewetting agents affect the printability of the ink, as they do not dry effectively without heat and are therefore more costly to print with. In addition these compositions require higher concentrations of humectant or rewetting agent to achieve the desired tack stability for the ink. Further, in US Patent No. 6,444,022 the water based lithographic ink uses certain linseed oil modified resins and humectants which extinguished the need for the humidity chamber associated with waterbased inks described in US Patent 5,725,646, but the inks retained gloss and drying problems.

Accordingly there is a need for a water washable lithographic ink composition having low VOC content that uses no humectants which maintains good printability such as good tack and dynamic viscosity properties and has have high gloss, without causing any toning or set off at room temperature immediately after printing.

It has now been found that the above objectives can be realized by employing a lithographic printing ink comprised of a water, insoluble rosin resin dispersed in an oil mixture of non-water reducible oils and water reducible oils, a pigment and a pH neutralizing agent.

According to the present invention it has been found that a combination of water reducible oils/polyesters and non-water reducible oils/polyesters, such as linseed based alkyds, can be used to disperse conventional water insoluble rosin resins, having a combination of low and high acid numbers to provide ink varnishes having a stable low rating tack. When these varnishes are blended with the appropriate pigment colorants they produce water washable lithographic inks of low VOC content having excellent tack and dynamic viscosity and gloss profiles for printing.

### Water Insoluble Rosin Resin

The water insoluble rosin resin is made of rosin resin modified with mixtures of bifunctional non-water reducible oils/polyesters and water reducible oils/polyesters, alkyds, and the like. The water insoluble rosin resin is comprised of low and high acid number resins. The low acid number resins will have an acid number of up to about 45. The high acid number resin will have an acid number of about 45 to about 400. The water insoluble rosin resin is synthesized to be comprised of up to about 90% of low acid number resin and up to about 10% high acid number resin or to have a parts ratio of less than 1 part high acid number resin to about 9 parts low acid number resin. The water insoluble rosin resin may also include small amounts of a free flow varnish. This amount will vary depending on required flowability for the varnish or ink and is within the discretion of those skilled in the art.

Suggested water insoluble rosin resins include, but are not limited to, phenolic, maleic, fumaric, pentaerythritol, hydrocarbon resins, and/or mixtures of these groups, water insoluble resins, water soluble polyamide resins, rosin resins, rosin salts, tall oil resins, methacrylic resins, styrene-acrylic resins, polystyrenesulfonic acid and its salts, and acrylic or vinyl emulsion polymers prepared from monomers selected from the group consisting of acrylic acid esters, fatty acid esters, methacrylic acid esters, acrylic acid esters of polyhydric alcohols, methyl methacrylate, styrene, vinyl styrene, and vinyl acetate, and mixtures thereof. The rosin resins may be gelled and/or free flowing resins. Preferred rosin resins are Filtrez 615, Filtrez 681, Albertol KP410, Albertol KP700, Albertol KP767, all manufactured by Akzo-Nobel Chemicals, Inc., Chicago, II. The above mentioned rosin resins are representative of high molecular weight modified rosin resins have low compatibility in mineral oils and are soluble in 2-ethylhexyltallate, fatty ester acid based oils. A variety of other conventional rosin resins can be used and are readily known to those of ordinary skill in the art.

### Oil Mixture

It has been discovered that a variety of environmentally acceptable non-water reducible oils such as fatty acid ester oils and in particular 2-ethylhexyltallate, fatty ester acid based oils and Magiesol oils, such as Magie Sol 62 (manufactured by Magie Brothers Oil, Franklin Park, II.) and the like, can be used in small amounts (less than 10 wt.%) to adjust the flowability and viscosity of a water washable lithographic printing ink composition. These non-water reducible oils have low molecular weight (less than 300), and are readily adsorbed by the substrate to provide quick setting and drying inks. The use of non-water reducible oils and/or polyesters in their unreacted form solubilize the water insoluble rosin resin. If the viscosity of the resulting ink varnish is high the amount of oil can be used to adjust and help in manufacturability and printability.

The water washable lithographic printing ink composition of the present invention contains a mixture of oils comprised of both water reducible and non-water reducible oils. The water reducible oil and/or polyester mixtures comprise the reaction product of various glycols or polyglycols and linseed or other vegetable oil. They may also include lithium ricinoleate, phthalic anhydride and triphenyl phosphate. Other water reducible oils for use in the present invention, include, but are not limited to, modified or unmodified oils, linseed oil, olive oil, castor oil, soybean oil, other vegetable oils, and mixtures thereof. Preferred water reducible oils polyesters are modified linseed oils such as DV 1469 DVPED200, both manufactured by Reichold Inc., Durham, NC., alcohol modified linseed oils such as Resydrol Val 5227W, manufactured by Akzo-Nobel Chemicals, Inc., Chicago, II., maleinized linseed oils such as Maleinized ARLO, manufactured by Degan Oil, Jersey City, NJ, and modified linseed oils with methoxy alcohol such as Maleated ARLO, manufactured by Sun Chemical, Ft. Lee, NJ. The water reducible oils/polyesters may be added to the composition directly or contained in the pigment flush (up to 50% of the pigment flush may contain water reducible oils/polyesters). The non-water reducible oils polyester mixtures of the present invention include, but are not limited to, fatty acid ester oil groups and MagieSol oils, such as Magie Sol 62 (manufactured by Magie Brothers), modified soy oils, phthallate ester oils, tallate esters, petroleum oils, and mixtures thereof. Preferred non-water reducible oils include petroleum based oils such as Magie Oil 500 and MagieSol 62, both manufactured by Magie Brothers Oil, Franklin Park, II.; fatty acid ester oils such Nirez 9012, manufactured by Arizona Chemicals, Jacksonville, FI.; phthalate ester oils such as Estisol 256 and Estisol 312, both manufactured by Haltermann GmbH, Hamburg, Germany; tallate ester oils such as 2EH Tallate, manufactured by Chemol, Inc., Greensboro, NC; and modified soy oils such as Vikoflex, manufactured by Elf-Atochem, King of Prussia, Pa. One of ordinary skill in the art will routinely know how to vary the quantity and ratio of water reducible and non-water reducible oils/polyesters of the lithographic ink composition in order to achieve the desired tack and dynamic viscosity for a specific ink composition.

### Pigment

Pigments which may be incorporated into the rosin resin ink vehicle include all of those conventionally used and any dye, pigment, filler, or the like, which can be bonded to the rosin resin and permit the resultant resinated pigment to be dispersed, milled, mixed, blended, or dissolved in any conventional manner in forming the ink composition. In addition to the pigment, the composition may also contain a blend of conventional resins used as binder resins for pigments. Conventional pigment binder resins may include those sold under the GAX™ mark by FitzChemicals Corporation, Elmhurst, Illinois, U.S.A . Examples of such pigments include the Color Index Pigments (C.I. Pigments) listed in the table below:

| ***Pigment Generic Name*** | ***Pigment C.A. Index*/*Chemical Name*** |
|---|---|
| C.I. Pigment Yellow 17 | Butanamide, 2,2'-[(3,3'-dichloro[1,1'-bipehnyl] 4,4'-diyl)bis(azo)bis [N-(2-methoxypehnyl)-3-oxo- |
| C.I. Pigment Blue 27 | Ferrate (4-1), hexakis (cyano-C)-ammonium iron (3+)(1:1:1) |
| C.I. Pigment Red 49:2 | 1-Naphthalenesulfonic acid, 2-[(2-hydroxy-1-naphthalenyl)azo]-, calcium salt (2:1) |
| C.I. Pigment Red 81: | Benzoic acid, 2,-[6-ethyl-amino)-3-(ethylimino)-2,7-dimethyl-3H-xanthen-9-yl]-, ethyl ester, w/molybdenum tungsten hydroxide oxide phosphate |
| C.I. Pigment Red 81:3 | Benzoic acid, 2-[6-ethyl-amino)-3-ethylimino)-2,7-dimethyl-3H-xanthen-9-yl]-, ethyl ester, molybdatesilicate |
| C.I. Pigment Red 81:x | Benzoic add. 2-[6-(ethyl-amino)-3-(ethylimino)-2.7-dimethyl-3H-xanthen-9-yl]-, ethyl ester, molybdatephosphate |
| C.I. Pigment Yellow 83 | Butanamide, 2,2'-[(3,3'-dichloro[1,1'-biphenyl]-4,4'-diyl)bis(azo)bis[N-(4-chloro-2,5-dimethoxy-phenyl)3-oxo- |
| C.I. Pigment Violet 23 | Diindolo[3,3'.2'm] triphenodioxazine, 8,18-dichloro-5,15-diethyl- 5,15-dihydro- |
| C.I. Pigment Red 49:1 | 1-Naphthalenesulfonic naphthalenyl)azo]-, barium salt (2:1) |
| C.I. Pigment Red 57:1 | 2-Naphthalenecarboxylic acid, 3-hydroxy-4-[(4- methyl-2-sulfophenyl)azo]-, calcium salt (1:1) |
| C.I. Pigment Blue 61 | Benzenesulfonic acid, [[4-[ (4-phenylamino)-phenyl]-4-(phenylimino)-2.5-cyclohexadien-1-ylidene]methyl]-phenyl] amino]- |
| C.I. Pigment Red 48:1 | 2-Naphthalenecarboxylic acid, 4-[(5-chloro-**4-methyl-2-sulfophenyl)azo]-3-hydroxy-,** barium salt (1:1) |
| C.I. Pigment Red 52:1 | 2-Naphthalenecarboxylic acid, 4-[(4-chloro-5-methyl-2-sulfophenyl)azo]-3-hydroxy-, calcium salt (1:1) |
| C.I. Pigment Violet 1 | Ethanaminium, N-[9-(2-Carboxyphenyl)-6-(diethyl-amino)-3H-xanthen-3-ylidene]-N-ethyl-, molyb-Datetungstatephosphate |
| C.I. Pigment White 6 | Titanium oxide (TiO₂) |
| C.I. Pigment Blue 15 | Copper, [29H, 31H-phthalocyaninato (2-)-N²⁹, N³⁰, N³¹, N³² [-, (Sp-4-1) |
| C.I. Pigment Yellow 12 | Butanamide, 2,2'-[(3,3'-dichloro[1,1'-biphenyl]-4,4'-diyl)bis(azo)]bis[3-oxo-N-phenyl- |
| C.I. Pigment Blue 56 | Benzenesulfonic acid, 2-methyl-4-[[4-[[4-[ (3-methylphenyl)amino] phenyl]-[4-[(3-methyl-phenyl)-imino]-2-5-cyclohexadien-1-ylidene]methyl]-phenyl]amino]- |
| C.I. Pigment Orange 5 | 2-Naphthalenol, 1-[(2,4-dinitrophenyl)azo]- |
| C.I. Pigment Black 7 | Carbon black |
| C.I. Pigment Yellow 14 | Butanamide, 2,2'-[(3,3'-dichloro[1,1'-biphenyl]-4.4'-diyl)bis(azo)]bis-[N-(2-methylpheny 10-3-oxo- |
| C.I. Pigment Red 48:2 | 2-Naphthalenecarboxylic acid, 4-[(5-chloro-4-methyl-2-sulfophenyl)-azo]-3-hydroxy-, calcium salt (1:1) |
| C.I. Pigment Blue 15:3 | Copper. [29H, 31H-Phthalocyaninato (2-)-N²⁹, N³⁰, N³¹, N³²]-, (SP-4-1)- |
| C.I. Pigment Yellow 1 | Butanamide, 2-[(4-methyl-2-nitrophenyl)azo]-3-oxo-N-phenyl- |
| C.I. Pigment Yellow 3 | Butanamide, 2-[(4-chloro-2-nitrophenyl) azo]-N-(2-chlorophenyl)-3-oxo- |
| C.I. Pigment Yellow 13 | Butanamide, 2,2'-(3,3'-dichloro[1,1'-biphenyl]-4,4'-diyl)bis(azo)]bis [N-(2,4-dimethylphenyl)-B- oxo- |
| C.I. Pigment Orange 16 | Butanamide, 2,2'-[(3,3'-dimethoxy[1,1'-biphenyl]-4,4'-diyl)bis(azo)]bis [3-oxo-N-phenyl- |
| C.I. Pigment Yellow 55 | Butanamide, 2,2'-[(3,3'- dichloro[1,1'-biphenyl]-4,4'-diyl)bis(azo)]bis [N-(4-methylphenyl)-3-oxo- |
| C.I. Pigment Red 41 | 3H-Pyrazol-3-one,4,4'-[(3,3'-dimethoxy[1,1'-biphenyl]-4,4'-diyl)bis (azo)]bis[2,4-dihydro-5-methyl-2-phenyl- |
| C.I. Pigment Orange 34 | 3H-Pyrazol-3-one,4,4'-[(3,3'-dichloro[1,1'-biphenyl]-4,4'-diyl)bis (azo)]bis[2,4-dihydro-5-methyl-2-(4-methylphenyl) |
| C.I. Pigment Blue 62 | 4,4'-Bis(diethylamino) benzophenone condensed with N-ethyl-1-naphthyl-amine in toluene with phosphorous oxychloride and converted to the copper ferrocyanide salt (PTMA salt in P.Blue 1) |
| C.I. Pigment Red 22 | 2-Naphthalenecarboxamide,3-hydroxy-4-[(2-methyl-5-nitrophenyl)azo]-N-phenyl- |
| C.I. Pigment Red 170 | 2-Naphthalenecarboxamide, 4-[[(4-(aminocarbonyl) phenyl]azo]-N-(2-ethoxy-phenyl)-3-hydroxy- |
| C.I. Pigment Red 88 | Benzo[b]thiophen-3(2H)-one, 4.7-dichloro-2-(4,7-dichloro-3-oxobenzo[b]thien-2(3H)-ylidene)- |
| C.I. Pigment Yellow 151 | A diazotized aniline derivative coupled with an acetoacetyl derivative of 5-aminobenzimidazolone |
| C.I. Pigment Red 184 | A diazotized substituted aniline coupled with a derivative of 3-hydroxy- 2-naphthanilide |
| C.I. Pigment Blue 1:2 | Ethanaminium, N-[4-[[4-(diethylamino)phenyl] [4-(ethylamino)-1-1 naphthalenyl]methylene]-2,5-cyclohexadien-1-ylidene]-N-ethyl-, [orthosilicato(4-)] hexatriacontaoxo-dodecamolybdate(4)-(4:1) |
| C.I. Pigment Blue 15:1 | Copper,[29H,32H-phthalocyaninato(2-)-N²⁹, N³⁰, N³¹, N³² ]-, (SP-4-1)- or Copper,[chloro-29H, 31H-phthalocyaninato (2-1)-N²⁹, N³⁰, N³¹, N³²]- |
| C.I. Pigment Red 23 | 2-Naphthalenecarboxamide, 3-hydroxy-4-[(2-methoxy-5-nitrophenyl)azo]-N-(3-nitrophenyl) |
| C.I. Pigment Red 3 | 2-Naphthalenol, 1-[(4-methyl-2-nitro-phenyl)azo]- |
| C.I. Pigment Yellow 126 | A tetrazotized derivative of 3,3-dichlorobenzidene coupled with a derivative of acetoacetanilide |
| C.I. Pigment Red 169 | 3-Ethylamino-p-cresol condensed with phthalic anhydride, esterified with ethanol and a mineral acid, and converted to the copper ferrocyanide complex (chloride salt is C.I. Basic Red 1, PTMA salt is P.Red 81:1) |
| C.I. Pigment Orange 13 | 3H-Pyrazol-3-one, 4,4'-[(3,3'-dichloro [1,1'-biphenyl]-4,4'-diyl)bis(azo)]bis[2,4-dihydro-5-methyl-2-phenyl |
| C.I. Pigment Red 10 | 2-Naphthalenecarboxamide, 4-[(2,5-dichlorophenyl) azo]-3-hydroxy-N-(4-methylphenyl |
| C.I. Pigment Blue 1:X | Ethanaminium, N-[4-[[4-(diethylamino)phenyl] [4-(ethylamino)-1-naphtha-lenyl]methylene]-2,5-cyclohexadien-1-ylidene]-N-ethyl-, molybdate-phosphate |
| C.I. Pigment Yellow 42 | Iron oxide (Fe₂O₃) hydrate |
| C.I. Pigment Red 101 | Iron oxide (Fe₂O₃) |
| C.I. Pigment Brown 6 | Iron oxide (Fe₂O₃), some FeO and Fe₂O₃H₂O |
| C.I. Pigment Brown 7 | Iron oxide (Fe₂O₃) plus varying amounts of clay |
| C.I. Pigment Brown 7:X | Fe₂O₃ x MnO₂ with varying amounts of clay |
| C.I. Pigment Metal 1 | Aluminum |
| C.I. Pigment Black 11 | FeO.Fe₂O₃ |
| C.I. Pigment Metal 2 | Copper, zinc |
| C.I. Pigment Red 112 | 2-Naphthalenecarboxamide, 3-hydroxy-N-(2-methyl-phenyl)-4-[(2,4,5-tri-chlorophenyl)azo]- |

The pigment may be added to the lithographic printing ink composition in either dry powder, flush, presscake, or water based dispersion form.

### pH Neutralizing Agent

The composition of the present invention also contains a neutralization agent to neutralize the pH of the water insoluble resin, be it either acidic or basic in nature. The pH neutralizing agent may also solubilize the high acid number water insoluble rosin resin. Acid pH neutralizing agents are selected from primary amines, secondary amines and/or tertiary amines such as: monoethanolamine, diethanolamine, triethanolamine, N-dimethylehexylamine, dimethylethanolamine, methyldiethanolamine, polyethylene imine, triethylanolamine, propylene diamine, hexamethylene amine, hexamethylene diamine, urea, dibutyl amine, diethylene triamine, and mixtures thereof. Preferred acid pH neutralizing agents include monoethanolamine and hydroquinone. The above pH neutralizing agents are representative candidates of a variety of pH neutralizing agents both basic and acidic which can be used by those of ordinary skill in the art.

### Additives

The water washable lithographic printing inks of the present invention may also incorporate water to act as a rheology and/or a surface energy modifier of the ink composition and to enhance the water washability of the ink. The water may be an added component or be contributed by one of the other components of the composition such as residual water from a pigment flush or presscake.

The water washable lithographic printing ink may also include a nonionic surfactant selected from any used routinely in the art for ink and ink-related applications. The nonionic surfactants may be present in the ink composition of the invention in an amount such that the dynamic surface tension of the total composition is about 20 to about 40 dynes/cm. Examples of suitable nonionic surfactants include acetylenic glycols, ethoxylated glycols, sorbitan esters, and mixtures thereof. Particularly preferred are ethoxylated acetylenic diols. Preferred surfactants include, for example, SURFYNOL®, manufactured by Air Products and Chemicals, Inc., Allentown, Pennsylvania, U.S.A., and DISPERBYK®, manufactured by BYK Chemie, Wesel, Germany.

The ink may also contain a clay such as natural clay, or synthetic clay, such as synthetic layered silicate or hectorite, or mixtures thereof. Suitable synthetic clays include those in either gel-forming grades or sol-forming grades, although gel-forming grades are preferred. Suitable synthetic clays for use in the present invention, include laponites (a synthetic layered silicate) available, for example, from Laporte Industries, Ltd., United Kingdom. The clay when present in the invention, is used in an amount sufficient to achieve desired rheological properties of the ink composition.

The ink composition may also contain additional additives such as but are not limited to, waxes, for example, Jon Wax 26, Jon Wax 120 (available from S.C. Johnson & Sons, Inc., Racine, Wisconsin, U.S.A.), or Van Wax 35 (available from Vantage, Garfield, New Jersey, U.S.A.); modifiers for example, defoamers such as Resydrol (available from Vantage); Carbowet 990 (available from Vantage); Aerosol (available from McIntyre, Chicago, Illinois, U.S.A.). Finally, the ink composition may include alcohols such as N-propyl alcohol, isopropyl alcohol, propylene glycol, ethylene glycol monobutyl ether, or ethylene glycol; biocides; pH stabilizers; fatty acid esters; gellants; driers; dispersants; and thickeners such as acrysol RM-825 (available from Rohm and Haas, Philadelphia, Pennsylvania, U.S.A.).

### The Printing Ink Composition

The water washable lithographic printing ink composition of the present invention contains 30% to about 50% by weight of water insoluble rosin resin dispersed in a mixture of non-water reducible oils and/or polyesters and water reducible oils and/or polyesters. The combination is cooked at 160-260°C (wet or dry) for approximately 15-30 minutes. The rosin resin as previously mentioned can vary in acid number from 0-200 or higher. The mixture of non-water-reducible and/or reducible oils has "high solvency" power for the rosin resin. The ink composition also contains a pH neutralizing agent, a pigment and optionally up to about 25 wt.% water. Further additions may include a non-ionic surfactant in an amount sufficient to lower the dynamic surface tension of the total composition from about 20 to about 40 dynes/cm, and wax. One of ordinary skill in the art will routinely know to vary the quantities of each of the above component of the printing ink composition to achieve the desired printable properties.

The printing ink composition may contain water insoluble rosin resin in an amount up to about 90 wt.%. It is preferable that the rosin resin be present in an amount of up to about 60 wt.% and most preferred that the rosin resin be present in an amount of about 12 wt.% to about 35 wt.%. One of ordinary skill in the art will know to vary the amount of rosin resin in the ink composition in order to achieve the desired tack and rheology for a specific ink composition.

The oil mixture can contain up to about 70% of water reducible oil and up to about 90% of non-water reducible oil. The oil mixture may contain a ratio of at least 1 part of water reducible oil to 9 parts of non-water reducible oil. It is preferred that the oil mixture be present in an amount of up to about 70 wt.%, more preferred that the oil be present in an amount of up to about 45 wt.%, and most preferred that the oil be present in an amount of about 15 wt.% to about 45 wt.%.

In general, it is preferred that the ratio of water insoluble rosin resin to pigment is in the range of about 1 parts pigment to about 8 parts water insoluble rosin resin to about 1 parts pigment to about 1 parts water insoluble rosin resin (about 1:8 to about 1:1 parts). It is more preferred that the ratio of pigment to water insoluble rosin resin is about 1 parts pigment to about 4 parts water insoluble rosin resin (about 1:4 parts). Overall, the pigment may comprise up to about 50 wt.% of the overall composition.

It is preferred that the pigment be present in the ink composition in the amount of up to about 40 wt.% and more preferred that the pigment be present in an amount of up to about 30 wt.%. A person of ordinary skill in the art will recognize that the amount of pigment present in the ink composition of the present invention will vary, depending on several factors, including the desired opacity of the end product.

It is preferred that the pH neutralizing agent be present in the ink composition in the amount of up to about 10 wt.% and more preferred that the pH neutralizing agent be present in an amount of up to about 8 wt.%. One of ordinary skill in the art will know to vary the quantity of the pH neutralizing agent based on the desired viscosity and rheology of the ink.

While water can be incorporated in the printing ink composition in an amount up to about 25 wt.%, a preferred amount is up to about 10 wt.% and a more preferred amount is up to about 5 wt.%.

It is contemplated that the selected nonionic surfactant(s) may be present in the ink composition in an amount of about 0.1 wt.% to about 5 wt.%. It is preferred that the nonionic surfactant(s) be present in the ink composition in an amount of about 0.1 wt.% to about 2 wt.%.

It is preferred that the selected clay be present in an amount of up to about 10 wt.%, or up to about 5 wt.%.

The final ink composition is washable with water (pH=8) or slightly alkaline detergents such as ZEP, manufactured by ZEP Corporation, or water containing dispersible surfactants. Furthermore, high gloss (40-70) is obtainable due to the appropriate rheology in these ink compositions. Different levels of VOCs are possible depending on the composition. Thus, inks with less than 15 wt.% or 10 wt.%, or 5 wt.%, or even less than 1 wt.% of VOC content can be made and still maintain reasonable tacks.

The physical characteristics of the ink composition include tack between 11-23 (1200 rpm and 90°F), tan (viscous versus elastic flow to establish gloss development) of about 2 and viscosities in the range of 48 Pas (at 100s⁻¹). However, higher or lower viscosities are possible. In addition, continuous flow experiments in a controlled stress rheometer showed that ink compositions with good gloss had a yield stress of 0-100 Pa according to the H-B model applied in the 0.1-100 s⁻¹ shear rate region. However, the range of values of the rheological parameters is not limited to the values reported herein.

The water washable ink composition of the present invention dries rapidly and at a rate comparable to that achieved by conventional fountain solution oil based solvent ink systems and has low tack, emits reduced levels of volatile organic compounds (VOCs), and has a high gloss. The ink composition has no set off at room temperature after 0-5 minutes, which is also equal to that for inks using solvents and having a high VOC content. Thus, the present inks are as quick drying as conventional solvent based inks while being environmentally safer to produce. They also have a softer body versus that of the solvent based ink, and therefore can be handled more easy during manufacturing and have excellent printability while maintaining excellent gloss, without edge picking/pulling, and offer good fade resistance and press stability when compared to conventional solvent based inks. In addition, the inks of the present invention can be transferred with conventional multiple roller systems and remain open when subjected to dynamic stress, resulting in an improved roller stability in comparison with the inks of the prior art. The setting times of the printed final product using the ink composition can vary from up to 5 minutes to up to 15-20 minutes. It has been found that, in general, the high gloss of the final printed ink composition on a substrate can be maintained at fast setting rates and good set off can be achieved in the same time frame.

The water washable ink compositions of the present invention are further illustrated by the following non-limiting examples in which all parts and percentages of components are by weight and based on the total weight of the composition, unless otherwise indicated.

### Example 1 (Comparative)

Comparative water washable lithographic inks (containing only water reducible oils and not a mixture of oils) were prepared from the components indicated below:

**Table I**

| **Component** | **Composition** | | | | | | |
|---|---|---|---|---|---|---|---|
| | **A** | **B** | **C** | **D** | **E** | **F** | **G** |
| Cyan Flush containing up to 50% water reducible oil | 58.8 | 57.3 | 58.8 | --- | --- | --- | 58.8 |
| Magenta Flush containing up to 50% water reducible oil | --- | --- | --- | 57.8 | 56.8 | 57.8 | --- |
| Rosin resin in water reducible oil | 39 ^{(a)} | 37.5^{(b)} | 31^{(a)} & ^{(b)} in 50:50 | 31^{(a)} | 30^{(a)} | 31^{(a)} | 31^{(a)} |
| Non-water reducible oil | --- | --- | 5 ^{(c)} | 6^{(d)} | 8^{(d)} | --- | --- |
| Neutralizing agent (acid) | 0.2 | 0.2 | 0.2 | 0.2 | 0.2 | 0.2 | 0.2 |
| Fatty acid ester | --- | --- | --- | --- | --- | 6 ^{(e)} | 5 ^{(e)} |
| Driers | 2 | 2 | 2 | 2 | 2 | 2 | 2 |
| Gellant | --- | 3 | 3 | 3 | 3 | 3 | 3 |
| Total | 100 | 100 | 100 | 100 | 100 | 100 | 100 |

| | | | | | | | |
|---|---|---|---|---|---|---|---|
| ^{(a)} Filtrez 615 (30 wt.%), manufactured by Akzo-Nobel Chemicals, Inc., Chicago, II ., a phenolic modified rosin, in DV 1469 (70 wt.%), manufactured by Reichold Inc, Durham, NC; a modified linseed oil. | | | | | | | |
| ^{(b)} Filtrez 681 (30 wt.%), manufactured by Akzo-Nobel Chemicals, Inc., Chicago, II., a phenolic modified rosin ester, in DV 1469 (70 wt.%), manufactured by Reichold Inc, Durham, NC; a modified linseed oil. | | | | | | | |
| ^{(c)} Magie Oil 500, manufactured by Magie Brothers Oil, Franklin Park, II, a petroleum based oil. | | | | | | | |
| ^{(d)} MagieSol 62, manufactured by Magie Brothers Oil, Franklin Park, II, a petroleum based oil. | | | | | | | |
| ^{(e)} Nirez 9012, manufactured by Arizona Chemicals, Jacksonville, FI, a fatty acid ester oil. | | | | | | | |

### Example 2 (Comparative)

Prints were made on a Didde press using the lithographic inks of Example 1 and a web substrate of 60# coated paper. The magenta colored ink compositions (A, B, C and G) and the cyan colored compositions (D, E, and F) resulted in printed sheets that dried instantly at an elevated web temperature of 300°F. The resulting gloss of the magenta colored printed sheets was 42-50.

### Example 3 (Comparative)

The comparative inks in Example 1 were printed on a coated substrate using a Miehle press. The tack for the ink was measured using a Tackmaster 92 (manufactured by Kershaw Instrumentation, Swedsboro, NJ) operating at a speed of 1200 rpm at 70°F. These test results are set forth below:

**Table II**

| **Component** | **Composition** | | | | | | |
|---|---|---|---|---|---|---|---|
| **Properties** | **A** | **B** | **C** | **D** | **E** | **F** | **G** |
| Tack (1-5 min.) | 22.6-23.4 | 22.4 | 23-23.8 | 22.8-23.1 | 21-21.7 | 21.3-22.7 | 23.3-23.3 |
| Viscosity (Pas@100s⁻¹) | 34 | 34 | 48 | 48 | 48 | 44 | 56 |
| VOC content | 0 | 0 | 4 | 2 | 3 | 0 | 0 |

The printed substrates dried in 15-20 minutes at room temperature and had a resulting gloss of up to 45-50. The magenta colored printed sheets (D, E, and F) were tack free within 3-4 minutes at a web temperature of 270°F and had minimal tack at a web temperature of 150°F within 15-20 minutes. However, the viscosity of the magenta colored print sheets was high. In contrast, the cyan colored printed sheets (A, B, C and G) had lower viscosity but a higher tack, which disrupts effective printing. The inks were washable with ZEP cleaning solution, manufactured by ZEP Corporation.

The Miehle press trial established the feasibility of making a fast drying water washable system that is very low in VOCs (<5%). However, a faster drying ink with low tack was still needed and continued experimentation using a mixture of water reducible and non-water reducible oils was undertaken.

### Example 4

Water washable lithographic inks were prepared from the components indicated below:

**Table III**

| **Component** | **Composition** | | | | | | |
|---|---|---|---|---|---|---|---|
| | **A** | **B** | **C** | **D** | **E** | **F** | **G** |
| Magenta Flush containing up to 50% water reducible oil | 50 | 50 | 53 | 55 | 52 | 55 | 55 |
| Rosin resin and non-water reducible oil | 45 ^{(a)} | 45 ^{(a)} | 42^{(b)} | 38^{(c)} | 31^{(d)} | 38^{(e)} | 38^{(c)} |
| pH neutralizing agent ⁽¹⁾ | 0.2 | 0.2 | 0.2 | 0.2 | 0.2 | 0.2 | 0.2 |
| Driers | 2 | 2 | 2 | 2 | 2 | 2 | 2 |
| Gellant | 2.8 | 2.8 | 2.8 | 2.8 | 2.8 | 2.8 | 2.8 |
| Wax | --- | --- | --- | 2 | 2 | 2 | 2 |
| Total | 100 | 100 | 100 | 100 | 100 | 100 | 100 |

| | | | | | | | |
|---|---|---|---|---|---|---|---|
| ^{(a)} Albertol KP410 (32.3 wt.%), manufactured by Akzo-Nobel Chemicals, Inc., Chicago, II., a Resol modified rosin resin, in Estisol 256 (67.7 wt.%), manufactured by Haltermann GmbH, Hamburg, Germany, a 2-ethylhexanoate coconut oil. | | | | | | | |
| ^{(b)} Albertol KP410 ( wt.%), manufactured by Akzo-Nobel Chemicals, Inc., Chicago, II., a Resol modified rosin resin, in Estisol 256 ( wt.%), manufactured by Haltermann GmbH, Hamburg. Germany, a 2-ethylhexanoate coconut oil, in DV 1469 ( wt.%), manufactured by Reichold Inc, Durham, NC, a modified linseed oil. | | | | | | | |
| ^{(c)}Albertol KP410 ( wt.%), manufactured by Akzo-Nobel Chemicals, Inc., Chicago, II., a Resol modified rosin resin, in Estisol 256 ( wt.%), manufactured by Haltermann GmbH, Hamburg, Germany, a 2-ethylhexanoate coconut oil, in Vikoflex ( wt.%), manufactured by Elf-Atochem, King of Prussia, PA, a modified soy oil. | | | | | | | |
| ^{(d)} Filtrez 681 ( wt.%), manufactured by Akzo-Nobel Chemicals, Inc., Chicago, II., a phenolic modified rosin ester, in Estisol 256 ( wt.%), manufactured by Haltermann GmbH, Hamburg, Germany, a 2-ethylhexanoate coconut oil, in DVPED200 ( wt%), manufactured by Reichold Inc. Durham, NC, a modified linseed oil. | | | | | | | |
| ^{(e)} Albertol KP410 ( wt.%), manufactured by Akzo-Nobel Chemicals, Inc., Chicago, II., a phenolic modified rosin ester, in Estisol 312 ( wt.%), manufactured by Haltermann GmbH, Hamburg, Germany, a 2-ethylhexyl ester oil, in DV 1469 ( wt.%), manufactured by Reichold Inc, Durham, NC, a modified linseed oil. | | | | | | | |
| ^{(f)} Monoethanolamine, manufactured by Dow Chemical, Midland, Mi., an amine. | | | | | | | |

### Example 5

The ink compositions of Example 4, containing mixtures of water reducible and non-water reducible oils, were printed on a substrate using a Miehle press. The tack was measured using a Tackmaster 92 as described in Example 3. These results are set forth below:

**Table IV**

| **Component** | **Composition** | | | | | | |
|---|---|---|---|---|---|---|---|
| **Properties** | **A** | **B** | **C** | **D** | **E** | **F** | **G** |
| Tack (1-5 min.) | 11.6-14.1 | 16.7-19.1 | 15.4-17.2 | 19.3-20.9 | 20.1-20.9 | 20.1-21.1 | 16.6-16.6 |
| Viscosity (Pas@100s⁻¹) | -------- | >35 | -------- | 33 | »33 | -------- | -------- |
| VOC content | 30% | 27% | <15% | 10% | 9% | <4% | <4% |
| Gloss/Prufbau | -------- | -------- | 44 | 44 | 46 | 41 | 48 |

The volatile organic compound ("VOC") content of the ink was generally less than 15 wt.% and no toning occurred on the Miehle Press. The inks immediately set on the printed substrate at 270°F Sinvatrol oven temperature (65°C web temperature). Example 4 produced inks having substantially less overall tack than that of the water reducible oil only inks of Comparative Examples 1-3. In addition, the inks of Example 4 exhibited superior setting properties than those in Comparative Examples 1-3 improved gloss.

### Example 6

Water washable magenta colored printing ink compositions were developed using varied rosin resins and oil mixtures, as set forth below.

**Table V**

| **Component** | **Composition** | | | | | | | | |
|---|---|---|---|---|---|---|---|---|---|
| | **A** | **B** | **C** | **D** | **E** | **F** | **G** | **H** | **I** |
| Magenta Flush containing up to 50% water reducible oil | 41 | 41 | 41 | 41 | 41 | 41 | 40 | 40 | 42.5 |
| Rosin resin and non-water reducible oil | 46.5 ^{(a)} | 46.5 ^{(a)} | 46.5^{(a)} | 46.5^{(a)} | 46.5 ^{(a)} | 46.5 ^{(b)} | 45 ^{(b)} | 45 ^{(b)} | 55 ^{(b)} |
| Water reducible oil | 10 ^{(c)} | 10 ^{(d)} | 10 ^{(e)} | 10^{(f)} | 10^{(g)} | 10^{(d)} | 12.5 (c) | 10.5 ^{(c)} | 0 |
| pH neutralizing agent^{(h)} | 0.5 | 0.5 | 0.5 | 0.5 | 0.5 | 0.5 | 0.5 | 0.5 | 0.5 |
| Surfactant | ----- | ----- | ----- | ----- | ----- | ----- | ----- | 2.0 | ----- |
| Drier | 2.0 | 2.0 | 2.0 | 2.0 | 2.0 | 2.0 | 2.0 | 2.0 | 2.0 |
| Total | 100 | 100 | 100 | 100 | 100 | 100 | 100 | 100 | 100 |

| | | | | | | | | | |
|---|---|---|---|---|---|---|---|---|---|
| ^{(a)} Albertol KP700 (45 wt.%), manufactured by Akzo-Nobel Chemicals, Inc., Chicago, II., a high molecular weight modified rosin resin (low compatibility in mineral oils), in 2-ethylhexyltallate (55 wt.%), a fatty ester acid based oil. | | | | | | | | | |
| ^{(b)} Albertol KP767 (45 wt.%), manufactured by Akzo-Nobel Chemicals, Inc., Chicago, II, a very high molecular weight modified rosin resin (extremely low compatibility in mineral oils), in 2-ethylhexyltallate (55 wt.%), a fatty ester acid based oil. | | | | | | | | | |
| ^{(c)} Resydrol Val 5227W, manufactured by Akzo-Nobel Chemicals, Inc., Chicago, II., an alcohol modified linseed oil. | | | | | | | | | |
| ^{(d)} Maleinized Tung Oil, manufactured by Degen Oil, Jersey City, NJ. | | | | | | | | | |
| ^{(e)} DV1469, manufactured by Reichold Inc, Durham, NC, a modified linseed oil. | | | | | | | | | |
| ^{(f)} Maleinized ARLO, manufactured by Degen Oil, Jersey City, NJ, a maleinized linseed oil. | | | | | | | | | |
| ^{(g)} Maleated ARLO, made by Sun Chemical, Carlstadt, NJ, a modified linseed oil with methoxy alcohol. | | | | | | | | | |
| ^{(h)} Hydroquinone, manufactured by Akzo-Nobel Chemicals, Inc., Chicago, II, an amine. | | | | | | | | | |

### Example 7

Then inks of Example 6 above were printed using a Miehle press on a coated substrate. The tack was measured as described in Example 3. Print density was measured using an ExRite Densitometer (manufactured by ExRite of Granville, Mi.). These results are set forth below:

| **Component** | **Composition** | | | | | | | | |
|---|---|---|---|---|---|---|---|---|---|
| **Properties** | **A** | **B** | **C** | **D** | **E** | **F** | **G** | **H** | **I** |
| Tack at 1 min. | 14.6 | 14.7 | 14.5 | 14.4 | 14.3 | 14.7 | 13.8 | 13.7 | 14.2 |
| Tack at 5 min. | 14.7 | 14.9 | 14.6 | 13.5 | 14.4 | 14.6 | 13.9 | 13.9 | 14.2 |
| Viscosity (poise/2500s⁻¹) | 225.6 | 243.6 | 272.9 | ----- | 282.2 | 526.9 | 379.2 | 378.5 | 258.4 |
| Print density | 1.47 | 1.46 | 1.50 | 1.47 | 1.52 | 1.45 | 1.44 | 1.44 | 1.48 |
| Gloss | 36.5 | 42.1 | 39.4 | 31.7 | 44.1 | 34.7 | 32.2 | 31.7 | 36.9 |
| Set Off | Good | Good | Good | Good | Good | Good | Poor | Good | Good |

It was observed that the tack of Example 6 inks was substantially reduced as compared to conventional solvent based inks and the viscosity was superior. In addition, the setting, drying and gloss properties of Example 6 Inks were comparable to that offered by conventional solvent inks (having high VOC content). Specifically, the inks of Example 6 provided no set-off using both coated and uncoated substrates within the same time frame as solvent based inks. Further, the inks dried within the same time frame as expected for conventional solvent based inks, and tan(delta) of 1-2 were obtained consistent with gloss development. The inks also had a gloss measurement higher than that of conventional solvent based inks and printed without toning or the observance of edge picking. The inks were washed from the press as described in Example 3 and the observed water washability for the inks was excellent.

Overall, the underlying varnishes (rosin resins and oil mixtures without the pigment) used to formulate the inks of Example 6 provided very low and extremely low compatibility in fatty mono-esters, while maintaining high viscosities and molecular weights. The ink tack was as low as 8-10. In general, the inks provided higher viscosity than conventional solvent based inks.

Of the oil mixtures used, the modified linseed oil with alcohol (Example 7C) exhibited superior performance to the maleinized tung oil (Examples 7B, 7G, 7H, and 7I). The modified linseed oil (Examples 7D and 7E) provided the best results in low tack without reducing the gloss and water washability for the ink. The maleinized linseed with alcohol (Example 7A) exhibited the best water washability.

### Example 8

A water washable lithographic ink was prepared from the components indicated below:

| **Component** | |
|---|---|
| Rosin resin ^{(a)} | 24 |
| Water reducible oil ^{(b)} | 26 |
| Non-water reducible oil ^{(c)} | 17.5 |
| Dry Pigment (Carbon Black) | 15 |
| Acid neutralizing agent ^{(d)} | 0.6 |
| Fatty ester acid | 2 |
| Alkyd | 6 |
| Gellant | 1.5 |
| Wax | 4 |
| Driers | 2 |
| Anti-oxidant | 0.5 |
| **TOTAL** | **100** |

| | |
|---|---|
| ^{(a)} Albertol KP700 (45 wt.%), manufactured by Akzo-Nobel Chemicals, Inc., Chicago. II., a high molecular weight modified rosin resin (low compatibility in mineral oils), in 2-ethylhexyltallate (55 wt.%), a fatty ester acid based oil. | |
| ^{(b)}DV1469, manufactured by Reichold Inc. Durham, NC, s modified linseed oil; Resydrol Val 5227W, manufactured by Akzo-Nobel Chemicals, Inc., Chicago, II., an alcohol modified linseed oil. | |
| ^{(c)} 2 EH Tallate, manufactured by Chemol Inc., Greensboro, NC, a 2-ethyl-hexyl-tallate for non-water reducible oil. | |
| ^{(d)}MEA, manufactured by Dow Chemical, Midland, Mi., a monoethanolamine amine | |

The ink of Example 8 was run on various printing presses which include a Komori 40, a Heidelberg SM 74, a Mitsubishi and a OMCSA press. Typical printing runs produced 1,000-160,000 prints. No toning at the start or pulling was observed, which resulted in less paper waste. The prints provided no set off when both coated and uncoated substrates were used, which is comparable to that of conventional solvent based inks. The gloss level of the inks was the same as that provided by conventional solvent based inks. The inks allow the use of air dried water based coatings since they are low in VOC content. Finally, the inks were washed from the press as described in Example 3 and the observed water washability was excellent.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. A water washable lithographic printing ink composition comprising:
(a) water insoluble rosin resin;
(b) an oil mixture of water reducible and non water-reducible oils;
(c) pigment; and
(d) a pH neutralizing agent.

2. The composition of claim 1 wherein the amount of water insoluble rosin resin present is up to about 90 wt.%.

3. The composition of claim 1 or 2 wherein the amount of water insoluble rosin resin present is up to about 45 wt.%.

4. The composition of any one of claims 1 to 3, wherein the water insoluble rosin resin is a mixture of a low acid number rosin resin and a high acid number rosin resin.

5. The composition of claim 4 wherein the low acid number rosin resin has an acid number of up to 45.

6. The composition of claim 4 wherein the high acid number rosin resin has an acid number from about 45 to about 400.

7. The composition of any one of claims 1 to 6 wherein the water insoluble rosin resin is selected from the group consisting of phenolic, maleic, fumaric, pentaerythritol, hydrocarbon rosin resins and mixtures thereof.

8. The composition of any one of claims 1 to 6 wherein the water insoluble rosin resin is selected from the group consisting of dimerized and polymerized rosins, terpenes, polyamides, rosin resins, rosin salts, tall oil resins, methacrylic resins, styrene-acrylic resins, polystyrenesulfonic acid and its salts, and acrylic or vinyl emulsion polymers prepared from monomers selected from the group consisting of acrylic acid esters, fatty acid esters, methacrylic acid esters, acrylic acid esters of polyhydric alcohols, methyl methacrylate, styrene, vinyl styrene, and vinyl acetate rosin reins, and mixtures thereof.

9. The composition of any one of claims 1 to 8 wherein the amount of oil mixture is up to about 70 wt.%.

10. The composition of any one of claims 1 to 9 wherein the amount of oil mixture is up to about 55 wt.%.

11. The composition of any one of claims 1 to 10 wherein the water reducible and non-water reducible oils of the oil mixture are selected from the group consisting of polyester, alkyd, polyolefin and epoxy ester based oils.

12. The composition of any one of claims 1 to 10 wherein the water reducible and non-water reducible oils of the oil mixture is selected from the group consisting of vegetable oils and fatty acid ester oils.

13. The composition of claim 12 wherein the vegetable oils are selected from the group consisting of rapseed, linseed, soybean, castor, dehydrated castor, corn, tung oiticica, carnuba, and coconut oils and mixtures thereof.

14. The composition of claim 12 wherein the fatty acid ester oils are selected from monoesters alcohols of fatty acids.

15. The composition of claim 13 further comprising a glycol or glycol ether to modify the vegetable oil.

16. The composition of claim 13 further comprising a polyglycol or polyglycol ether to modify the vegetable oil.

17. The composition of any one of claims 1 to 16 wherein the pigment and water insoluble rosin resin are present in a parts ratio of about 1:8 to about 1:1.

18. The composition of claim 17 wherein the pigment and water insoluble rosin resin are present in a parts ratio of about 1:4 to about 1:1.

19. The composition of any one of claims 1 to 18 wherein the amount of pH neutralizing agent is up to about 10 wt.%.

20. The composition of claim 19 wherein the amount of pH neutralizing agent is up to about 5 wt.%.

21. The composition of any one of claims 1 to 20 wherein the pH neutralizing agent is an acid neutralizing agent.

22. The composition of any of claims 1 to 21, wherein the pH neutralizing agent is selected from the group consisting of primary amines, secondary amines and tertiary amines.

23. The composition of any one of claims 1 to 21 wherein the neutralizing agent is selected from the group consisting of monoethanolamine, diethanolamine, dimethylethanolamine, methyldiethanolamine, triethanolamine, N-dimethylhexylamine, polyethylene imine, triethylanolamine, propylene diamine, hexamethylene amine, urea, dibutyl amine, diethylene triamine, and mixtures thereof.

24. The composition of any one of claims 1 to 23 further comprising water.

25. The composition of claim 24 wherein the amount of water present is up to about 25 wt.%.

## Patentansprüche

1. Mit Wasser abwaschbare Lithographiedruckfarbenzusammensetzung, umfassend:
(a) wasserunlösliches Kolophoniumharz;
(b) ein Ölgemisch aus wasserreduzierbaren oder nicht wasserreduzierbaren Ölen;
(c) Pigment; und
(d) ein den pH-Wert neutralisierendes Mittel.

2. Zusammensetzung gemäß Anspruch 1, wobei die Menge an vorhandenem wasserunlöslichem Kolophoniumharz bis zu etwa 90 Gew.-% beträgt.

3. Zusammensetzung gemäß Anspruch 1 oder 2, wobei die Menge an vorhandenem wasserunlöslichem Kolophoniumharz bis zu etwa 45 Gew.-% beträgt.

4. Zusammensetzung gemäß einem der Ansprüche 1 bis 3, wobei das wasserunlösliche Kolophoniumharz ein Gemisch aus einem Kolophoniumharz mit niedriger Säurezahl und einem Kolophoniumharz mit hoher Säurezahl ist.

5. Zusammensetzung gemäß Anspruch 4, wobei das Kolophoniumharz mit niedriger Säurezahl eine Säurezahl von bis zu 45 aufweist.

6. Zusammensetzung gemäß Anspruch 4, wobei das Kolophoniumharz mit hoher Säurezahl eine Säurezahl von etwa 45 bis etwa 400 aufweist.

7. Zusammensetzung gemäß einem der Ansprüche 1 bis 6, wobei das wasserunlösliche Kolophoniumharz ausgewählt ist aus Phenol-, Malein-, Fumar-, Pentaerythritol-, Kohlenwasserstoff-Kolophoniumharzen und Gemischen davon.

8. Zusammensetzung gemäß einem der Ansprüche 1 bis 6, wobei das wasserunlösliche Kolophoniumharz ausgewählt ist aus dimerisierten und polymerisierten Kolophonium-Arten, Terpenen, Polyamiden, Kolophoniumharzen, Kolophoniumsalzen, Talkölharzen, Methacrylharzen, Styrolacrylharzen, Polystyrolsulfonsäure und ihren Salzen und Acryl- oder Vinylemulsionspolymeren, hergestellt aus Monomeren, ausgewählt aus Acrylsäureestern, Fettsäureestern, Methacrylsäureestern, Acrylsäureestern von mehrwertigen Alkoholen, Methylmethacrylat, Styrol, Vinylstyrol und Vinylacetatkolophoniumharzen und Gemischen davon.

9. Zusammensetzung gemäß einem der Ansprüche 1 bis 8, wobei die Menge an Ölgemisch bis zu etwa 70 Gew.-% beträgt.

10. Zusammensetzung gemäß einem der Ansprüche 1 bis 9, wobei die Menge an Ölgemisch bis zu etwa 55 Gew.-% beträgt.

11. Zusammensetzung gemäß einem der Ansprüche 1 bis 10, wobei die wasserreduzierbaren und nicht wasserreduzierbaren Öle des Ölgemischs ausgewählt sind aus Ölen auf Polyester-, Alkyd-, Polyolefin- und Epoxyesterbasis.

12. Zusammensetzung gemäß einem der Ansprüche 1 bis 10, wobei die wasserreduzierbaren und nicht wasserreduzierbaren Öle des Ölgemischs ausgewählt sind aus Pflanzenölen und Fettsäureesterölen.

13. Zusammensetzung gemäß Anspruch 12, wobei die Pflanzenöle ausgewählt sind aus Raps-, Leinsamen-, Soja-, Rizinus-, dehydriertem Rizinus-, Mais-, Tung-, Oiticica-, Carnuba- und Kokosnussöl und Gemischen davon.

14. Zusammensetzung gemäß Anspruch 12, wobei die Fettsäureesteröle ausgewählt sind aus Monoesteralkoholen von Fettsäuren.

15. Zusammensetzung gemäß Anspruch 13, ferner umfassend ein Glycol oder einen Glycolether, um das Pflanzenöl zu modifizieren.

16. Zusammensetzung gemäß Anspruch 13, ferner umfassend ein Polyglycol oder einen Polyglycolether, um das Pflanzenöl zu modifizieren.

17. Zusammensetzung gemäß einem der Ansprüche 1 bis 16, wobei das Pigment und das wasserunlösliche Kolophoniumharz in einem Teileverhältnis von etwa 1:8 bis etwa 1:1 vorhanden sind.

18. Zusammensetzung gemäß Anspruch 17, wobei das Pigment und das wasserunlösliche Kolophoniumharz in einem Teileverhältnis von etwa 1:4 bis etwa 1:1 vorhanden sind.

19. Zusammensetzung gemäß einem der Ansprüche 1 bis 18, wobei die Menge an dem pH-Wert neutralisierenden Mittel bis zu etwa 10 Gew.-% beträgt.

20. Zusammensetzung gemäß Anspruch 19, wobei die Menge an dem pH-Wert neutralisierenden Mittel bis zu etwa 5 Gew.-% beträgt.

21. Zusammensetzung gemäß einem der Ansprüche 1 bis 20, wobei das den pH-Wert neutralisierende Mittel ein eine Säure neutralisierendes Mittel ist.

22. Zusammensetzung gemäß einem der Ansprüche 1 bis 21, wobei das den pH-Wert neutralisierende Mittel ausgewählt ist aus primären Aminen, sekundären Aminen und tertiären Aminen.

23. Zusammensetzung gemäß einem der Ansprüche 1 bis 21, wobei das neutralisierende Mittel ausgewählt ist aus Monoethanolamin, Diethanolamin, Dimethylethanolamin, Methyldiethanolamin, Triethanolamin, N-Dimethylhexylamin, Polyethylenimin, Triethylanolamin, Propylendiamin, Hexamethylenamin, Harnstoff, Dibutylamin, Diethylentriamin und Gemischen davon.

24. Zusammensetzung gemäß einem der Ansprüche 1 bis 23, ferner umfassend Wasser.

25. Zusammensetzung gemäß Anspruch 24, wobei die Menge an vorhandenem Wasser bis zu etwa 25 Gew.-% beträgt.

## Revendications

1. Composition d'encre d'impression lithographique lavable à l'eau comprenant :
(a) une résine de colophane insoluble dans l'eau ;
(b) un mélange huileux d'huiles réductibles dans l'eau et non réductibles dans l'eau ;
(c) un pigment ; et
(d) un agent de neutralisation du pH.

2. Composition selon la revendication 1, dans laquelle la quantité de résine de colophane insoluble dans l'eau présente va jusqu'à environ 90 % en poids.

3. Composition selon la revendication 1 ou 2, dans laquelle la quantité de résine de colophane insoluble dans l'eau présente va jusqu'à environ 45 % en poids.

4. Composition selon l'une quelconque des revendications 1 à 3, dans laquelle la résine de colophane insoluble dans l'eau est un mélange de résine de colophane de faible indice d'acide et de résine de colophane d'indice d'acide élevé.

5. Composition selon la revendication 4, dans laquelle la résine de colophane de faible indice d'acide a un indice d'acide pouvant aller jusqu'à 45.

6. Composition selon la revendication 4, dans laquelle la résine de colophane d'indice d'acide élevé a un indice d'acide pouvant aller d'environ 45 à environ 400.

7. Composition selon l'une quelconque des revendications 1 à 6, dans laquelle la résine de colophane insoluble dans l'eau est choisie dans le groupe constitué par les résines de colophane phénoliques, maléiques, fumariques, de pentaérythritol, hydrocarbures et des mélanges de celles-ci.

8. Composition selon l'une quelconque des revendications 1 à 6, dans laquelle la résine de colophane insoluble dans l'eau est choisie dans le groupe constitué par les colophanes dimérisées et polymérisées, les terpènes, les polyamides, les résines de colophane, les sels de colophane, les résines de tallol, les résines méthacryliques, les résines styrène-acryliques, l'acide polystyrène sulfonique et ses sels, et les polymères acryliques ou vinyliques en émulsion préparés à partir de monomères choisis dans le groupe constitué par les esters de l'acide acrylique, les esters d'acides gras, les esters dé l'acide méthacrylique, les esters d'acide acrylique d'alcools polyhydriques, le méthacrylate de méthyle, le styrène, le vinylstyrène et les résines de colophane acétate de vinyle, et des mélanges de ceux-ci.

9. Composition selon l'une quelconque des revendications 1 à 8, dans laquelle la quantité de mélange huileux va jusqu'à environ 70 % en poids.

10. Composition selon l'une quelconque des revendications 1 à 9, dans laquelle la quantité de mélange huileux va jusqu'à environ 55 % en poids.

11. Composition selon l'une quelconque des revendications 1 à 10, dans laquelle les huiles réductibles dans l'eau et non réductibles dans l'eau du mélange huileux sont choisies dans le groupe constitué par les huiles à base de polyester, d'alkyde, de polyoléfine et d'ester d'époxyde.

12. Composition selon l'une quelconque des revendications 1 à 10, dans laquelle les huiles réductibles dans l'eau et non réductibles dans l'eau du mélange huileux sont choisies dans le groupe constitué par les huiles végétales et les huiles d'esters d'acides gras.

13. Composition selon la revendication 12, dans laquelle les huiles végétales sont choisies dans le groupe constitué par les huiles de colza, de lin, de soja, de ricin, de ricin déshydratée, de maïs, d'abrasin, d'oiticita, de carnauba et de coco et des mélanges de celles-ci.

14. Composition selon la revendication 12, dans laquelle les huiles d'esters d'acides gras sont choisies parmi les alcools de monoesters d'acides gras.

15. Composition selon la revendication 13, comprenant en outre un glycol ou un éther de glycol pour modifier l'huile végétale.

16. Composition selon la revendication 13, comprenant en outre un polyglycol ou un éther de polyglycol pour modifier l'huile végétale.

17. Composition selon l'une quelconque des revendications 1 à 16, dans laquelle le pigment et la résine de colophane insoluble dans l'eau sont présents dans un rapport en parties allant d'environ 1:8 à environ 1:1.

18. Composition selon la revendication 17, dans laquelle le pigment et la résine de colophane insoluble dans l'eau sont présents dans un rapport en parties allant d'environ 1:4 à environ 1:1.

19. Composition selon l'une quelconque des revendications 1 à 18, dans laquelle la quantité d'agent de neutralisation du pH va jusqu'à environ 10 % en poids.

20. Composition selon la revendication 19, dans laquelle la quantité d'agent de neutralisation du pH va jusqu'à environ 5 % en poids.

21. Composition selon l'une quelconque des revendications 1 à 20, dans laquelle l'agent de neutralisation du pH est un agent de neutralisation d'acide.

22. Composition selon l'une quelconque des revendications 1 à 21, dans laquelle l'agent de neutralisation du pH est choisi dans le groupe constitué par les amines primaires, les amines secondaires et les amines tertiaires.

23. Composition selon l'une quelconque des revendications 1 à 21, dans laquelle l'agent de neutralisation est choisi dans le groupe constitué par la monoéthanolamine, la diéthanolamine, la diméthyléthanolamine, la méthyldiéthanolamine, la triéthanolamine, la N-diméthylhexylamine, la polyéthylène imine, la triéthylanolamine, la propylène diamine, l'hexaméthylène amine, l'urée, la dibutylamine, la diéthylène triamine et des mélanges de celles-ci.

24. Composition selon l'une quelconque des revendications 1 à 23, comprenant en outre de l'eau.

25. Composition selon la revendication 24, dans laquelle la quantité d'eau présente va jusqu'à environ 25 % en poids.
